# FASCICULE DE BREVET EUROPEEN

(11) **EP 1 297 494 B1**
(45) Date de publication et mention de la délivrance du brevet: **10.09.2008**
(21) Numéro de dépôt: 01907707.2
(22) Date de dépôt: 05.02.2001
(51) Int. Cl.: G06T 9/00

(54) **PROCEDE ET DISPOSITIF DE TRAITEMENT DE SEQUENCES D'IMAGES AVEC MASQUAGE**
VERFAHREN UND VORRICHTUNG ZUR VERARBEITUNG VON BILDSEQUENZEN MIT MASKIERUNG
METHOD AND DEVICE FOR PROCESSING IMAGE SEQUENCES WITH MASKING

(30) Priorité: 03.02.2000 FR 0001377
(43) Date de publication de la demande: 02.04.2003
(73) Titulaire: UNIVERSITE PIERRE ET MARIE CURIE (PARIS VI), 75252 Paris Cédex 05 (FR)
(72) Inventeur: LOHIER, Frantz, Berkeley, CA 94702 (US); LACASSAGNE, Lionel, F-75007 Paris (FR); GARDA, Patrick, F-94320 Thiais (FR)
(74) Mandataire: Catherine, Alain
(86) Numéro de dépôt international: PCT/FR2001/000341
(87) Numéro de publication internationale: WO 2001/057803

(56) Documents cités:
- WO-A-97/15897
- US-A- 5 764 921
- DUMONTIER ET AL: "REAL-TIME DSP IMPLEMENTATION FOR MRF-BASED VIDEO MOTION DETECTION" IEEE TRANSACTIONS ON IMAGE PROCESSING,US,IEEE INC. NEW YORK, vol. 8, no. 10, octobre 1999 (1999-10), pages 1341-1347, XP000865383 ISSN: 1057-7149

## Description

La présente invention est relative à un procédé et à un dispositif de traitement d'au moins une séquence d'images.

Un tel traitement inclut notamment un encodage, pouvant en particulier consister en une compression d'une séquence d'images vidéo. Les données obtenues après cet encodage sont destinées à être transmises ou sauvegardées, en vue d'un décodage ultérieur pour une reconstitution dégradée des séquences d'images.

On connaît des techniques permettant de réduire la taille du flux et d'atténuer le bruit généralement engendré par des systèmes d'acquisition vidéo. Ces techniques consistent à distinguer des zones d'immobilité dans les images, au moyen d'un seuil de mouvement, et à masquer les images avant encodage, en imposant des valeurs nulles dans ces zones d'immobilité. De telles techniques permettent de ne comprimer que les données de l'image en mouvement et autorisent ainsi une faible dégradation du signal vidéo initial et/ou une utilisation de canaux de débits relativement faibles, tout en réduisant le bruit.

Ainsi, dans la demande de brevet FR-2 770 726, il est proposé un procédé de transmission de signaux vidéo dans lequel on envoie des informations qui indiquent qu'une zone d'une image courante est inchangée par rapport à une image de référence, si la variation de l'image courante par rapport à l'image de référence dans cette zone est inférieure à un seuil.

Pour ce faire, on réalise une transformation spatiale discrète sur l'image de différence résultant de la soustraction de l'image courante et de l'image de référence, en divisant l'image de différence en plusieurs zones correspondant à des blocs. On mesure ensuite la « variation » d'images en calculant pour chaque bloc une activité spatiale obtenue à partir des coefficients de la transformée spatiale discrète.

La présente invention concerne un procédé et un dispositif de traitement de séquences d'images permettant, par rapport aux techniques de masquage existantes, d'améliorer la qualité des images numérisées et en particulier d'offrir une robustesse plus grande de traitement.

L'invention concerne également un dispositif de traitement d'au moins une séquence d'images ayant les avantages précités.

Le procédé et le dispositif de l'invention ont des applications tout particulièrement dans les domaines:
- de la vidéoconférence ou de la vidéosurveillance,
- des magnétoscopes, des caméscopes ou appareils photos numériques,
- de la post-production audiovisuelle, notamment pour des montages vidéo, et
- des systèmes de compression-vidéo qui, pour des raisons de complexité calculatoire ou de coût, ne peuvent s'appuyer sur des standard du type MPEG.

A cet effet, l'invention a pour objet un procédé de traitement d'au moins une séquence d'images, dans lequel on met en oeuvre les opérations suivantes, itérativement pour une pluralité d'images courantes de cette séquence:
- on effectue la différence entre une des images courantes et une image de référence,
- on distingue dans cette différence d'images, des zones de mouvement et des zones d'immobilité, ces zones étant distinguées au moyen d'au moins un seuil de mouvement,
- on masque cette différence d'images en imposant des valeurs nulles dans les zones d'immobilité, et
- on encode la différence d'images masquée.

Selon l'invention, on détermine les zones de mouvement et les zones d'immobilité par la modélisation d'un champ de Markov .

Ainsi, le masquage repose sur une modélisation Markovienne d'un modèle spatio-temporel du mouvement. La distinction des zones de mouvement et des zones d'immobilité par une telle technique est robuste, dans la mesure où elle atténue la traînée du mouvement et tolère des variations de l'éclairage ambiant des séquences.

La modélisation du champ de Markov est avantageusement effectuée selon la méthode exposée dans l'article de C. Dumontier et al., « Real-Time DSP Implementation for MRF-based Video Motion Detection », IEEE Transactions on Image Processing, Vol.8, num. 10, oct. 1999, pp.1341-1347.

Une autre forme avantageuse de la modélisation, hiérarchique, est exposée dans l'article de A. Caplier et al., « An MRF-Based Spatiotemporal Multiresolution Algorithm for Motion Detection , 5th Scandinavian Conference on Image Analysis, Uppsale, Suède, Juin 1995, pp. 559-566.

Le masquage ainsi effectué permet de réduire l'encodage aux zones des images dans lesquelles se produisent réellement des mouvements, c'est-à-dire dans lesquelles l'entropie n'est pas réduite à une valeur très faible. De plus, l'utilisation d'un ou plusieurs seuils de mouvement permet de ne pas tenir compte, dans l'encodage, du bruit généralement introduit par des capteurs vidéo.

Ainsi, le procédé offre les avantages de faible dégradation du signal et/ou d'utilisation de canaux à faibles débits, et d'atténuation du bruit On constate également qu'elle permet d'améliorer la qualité des images numérisées, même en l'absence de compression avale.

Un autre avantage du procédé de traitement de l'invention est qu'il est compatible avec une grande diversité de techniques d'encodage, notamment de compression d'images.

Dans un premier mode préféré de modélisation pour le masquage, on effectue la modélisation du champ de Markov point par point. On peut ainsi produire une carte de mouvement très fine, qui autorise un encodage-sélectif au niveau du pixel. On obtient ainsi une très bonne qualité des images reconstruites, en évitant en particulier la présence d'artefacts de blocs.

Dans un autre mode préféré de modélisation, on effectue la modélisation du champ de Markov par blocs. On peut ainsi accélérer la vitesse de traitement, au prix d'une qualité moindre qu'avec une modélisation par pixels. De plus, la répartition en blocs correspond avantageusement à la technique d'encodage utilisée en aval, ce qui permet de simplifier et d'accélérer l'ensemble du traitement.

Selon une première forme des seuils de mouvement, ceux-ci consistent en un unique seuil global pour toute l'image. Dans une autre forme avantageuse, les seuils de mouvement sont une pluralité dépendant des zones de l'image, avantageusement choisis en fonction des intensités moyennes dans les zones voisines.

Préférentiellement, avant d'effectuer la modélisation du champ de Markov, on seuille la différence d'images. Un tel seuillage ou binarisation consiste à attribuer une valeur binaire à chaque entité de partition, c'est-à-dire selon les modes préférés de mise en oeuvre à chaque pixel (modélisation Markovienne par point) ou à chaque bloc (modélisation Markovienne par bloc). Cette valeur binaire est avantageusement égale à 0 ou à 1.

Dans une première forme préférée du seuillage (seuil unique pour toute l'image), celui-ci est un seuillage global.

Dans une seconde forme préférée du seuillage (pluralité de seuils) celui-ci est un seuillage par hystérésis. Le seuil en un pixel ou en un bloc donné est alors choisi par rapport à des seuils et à l'intensité de gris dans le voisinage.

La mise en oeuvre avec seuillage préalablement à la modélisation Markovienne est particulièrement intéressante, car elle permet d'appliquer de manière très efficace cette modélisation.

Préférentiellement, les étapes de seuillage et de modélisation sont effectuées selon les techniques décrites dans l'article de Dumontier et al. cité plus haut.

Avantageusement, lors de l'encodage, on compresse la différence d'images masquée. Une telle compression, qui peut être effectuée selon des méthodes classiques, permet de réduire sensiblement la quantité d'informations à transmettre ou à sauvegarder, au prix d'une dégradation plus ou moins grande des images et d'une masse calculatoire plus ou moins élevée.

Dans une première forme avantageuse de compression, on compresse la différence d'images masquée au moyen d'une méthode JPEG, préférentiellement avec perte. Par exemple, on pratique l'encodage au moyen d'un encodeur JPEG avec perte de type « Baseline ».

Selon une autre forme préférée de compression, on compresse la différence d'images masquée au moyen d'une méthode de compression par ondelettes, préférentiellement JPEG-2000.

Selon encore une autre forme préférée de compression, on compresse la différence d'images masquée au moyen d'une méthode de compression DVC. Une telle méthode de compression DVC est par exemple décrite dans la norme 61834 de la Commission Internationale Electronique (IEC).

La combinaison de ces techniques de compression avec le masquage amont est particulièrement avantageuse, car elle autorise un traitement à la fois rapide et avec une dégradation relativement faible, pouvant permettre par exemple un traitement respectant la cadence de la séquence d'images.

Au cours du procédé, on met à jour au moins une fois l'image de référence, en déterminant cette image de référence à partir d'au moins une image de base parmi la séquence d'images.

Cette mise à jour peut permettre de réduire la taille du flux de données encodées et de conserver une bonne qualité de reconstitution des images.

On s'intéresse à la fois à la nature des images de référence utilisées et à leur fréquence de mise à jour.

Selon une première forme des images de référence, on encode puis on décode les images de base pour déterminer l'image de référence, préférentiellement selon une même méthode que pour la différence d'images masquée.

Ainsi, l'image de référence est elle-même issue du traitement d'encodage-décodage, qui correspond avantageusement à la compression-décompression subie par la différence d'images. De cette manière, on obtient une bonne qualité de la séquence d'images reconstruite. Notamment, pour des taux de compression importants, on réduit ainsi la distorsion du flux de différence d'images, en s'assurant que les images de référence soustraites aux images courantes correspondent exactement aux images de référence reconstruites lors d'un décodage.

Selon un mode avantageux de cette première forme de mise en oeuvre, on compresse l'image de référence avec un taux de compression moins élevé (donc avec un facteur de qualité plus élevé) que celui de la compression de la différence d'images.

Un avantage de cette première forme de mise en oeuvre des images de référence est qu'elle requiert une taille de flux restreinte.

Dans une seconde forme avantageuse des images de référence pour déterminer l'image de référence, on utilise telles quelles les images de base.

On allège ainsi l'encodage-décodage sans introduire de dégradation dans l'image de référence.

Un avantage de cette seconde forme de mise en oeuvre est donc que les calculs sont réduits, au prix d'une augmentation relative de la taille du flux, qui ne concerne cependant que la gestion de l'image de référence.

En ce qui concerne la fréquence de mise à jour de l'image de référence, on mémorise avantageusement une table d'indices des images de référence, qui est sauvegardée ou transmise avec les autres informations, de manière à pouvoir reconstituer lors du décodage le positionnement des images de référence dans les données encodées entrelaçant les différences d'images encodées et les images de référence (encodées ou non).

Avantageusement, on calcule de manière répétitive, préférentiellement périodique, un paramètre de mise à jour de l'image de référence, et on remet à jour l'image de référence quand ce paramètre de mise à jour est supérieur à un seuil de mise à jour prédéterminé.

Des modes de calcul avantageux de ce paramètre de mise à jour sont définis ci-dessous. On utilise un ou plusieurs d'entre eux, l'utilisation conjointe de plusieurs critères reposant préférentiellement sur une pondération des différents critères. D'autres solutions consistent à utiliser une moyenne quadratique de ces critères ou à employer un seuil pour chaque critère et à déclencher une mise à jour dès que l'un des seuils est atteint.

Selon un premier mode préféré de calcul du paramètre de mise à jour, on détermine une proportion de zones en mouvement, le paramètre de mise à jour étant une fonction croissante de cette proportion.

Selon un deuxième mode préféré de calcul du paramètre de mise à jour, on mesure une distorsion de l'image courante, en comparant à l'image courante initiale avant soustraction de l'image de référence, une image courante reconstruite à partir de la différence d'images encodée et de l'image de référence, ce paramètre de mise à jour étant une fonction croissante de cette distorsion.

Pour comparer les images courantes initiale et reconstruite, on utilise avantageusement un rapport de pic signal sur bruit (Peak Signal to Noise Ratio ou PSNR).

Dans des variantes de mise en oeuvre, on utilise un rapport signal sur bruit (SNR) ou une erreur moyenne quadratique (Root Mean Square Error). Ces métriques n'expriment pas nécessairement un confort visuel de la dégradation pour un oeil humain, mais donnent une mesure stricte de la différence existant entre deux signaux.

Dans une troisième forme préférée de calcul du paramètre de mise à jour, on utilise un compteur incrémenté itérativement au cours du traitement de la séquence d'images, le paramètre de mise à jour étant une fonction croissante de ce compteur.

Ainsi, selon une première réalisation avantageuse de ce compteur celui-ci est une horloge donnant une information de durée.

Selon une autre réalisation avantageuse de ce compteur, il est prévu pour être incrémenté à chaque défilement d'image et donne donc une information sur le nombre d'images qui ont défilé depuis la dernière mise à jour (ce nombre pouvant être égal ou supérieur au nombre d'images traitées).

Dans une quatrième forme préférée de calcul du paramètre de mise à jour, on mesure une variation de taille du flux encodé (c'est-à-dire de la taille de flux de la différence d'images masquée et encodée), le paramètre de mise à jour étant une fonction croissante de cette variation.

Cette variation de taille du flux est préférentiellement analysée sur une pluralité d'images précédemment traitées et sur l'image en cours.

Dans une variante de mise en oeuvre. on ne pratique la mesure de variation que sur deux images consécutives de la séquence.

Avantageusement, on met à jour de manière répétitive, préférentiellement périodique, l'image de référence.

Cette mise à jour périodique peut être utilisée exclusivement, ou en combinaison avec l'utilisation d'un paramètre de mise à jour.

L'invention a également pour objet un dispositif de traitement d'au moins une séquence d'images comprenant:
- un noeud de soustraction d'une image courante de cette séquence et d'une image de référence, capable de produire une différence d'images,
- un noeud de détection de mouvement, permettant de distinguer dans la différence d'images des zones de mouvement et des zones d'immbolité au moyen d'au moins un seuil de mouvement,
- un noeud de masquage de la différence d'images par mise à zéro dans les zones d'immobilité, et
- un noeud d'encodage de la différence d'images masquée.

Selon l'invention, le noeud de détection de mouvement est prévu pour déterminer une carte de mouvement par la modélisation d'un champ de Markov.

Le dispositif de traitement comprend préférentiellement un ensemble de mise à jour de l'image de référence, comportant:
- au moins un système de sélection ayant une entrée de référence capable de recevoir l'image courante, une entrée courante reliée au noeud de masquage, une sortie de référence servant à produire l'image de référence et une sortie courante reliée au noeud d'encodage, l'entrée de référence pouvant être connectée à la sortie de référence et l'entrée courante pouvant être connectée à la sortie courante, et
- des moyens de déclenchement, recevant des signaux d'actualisation du dispositif de traitement et prévus pour déclencher une connexion de l'entrée de référence et de la sortie de référence quand les signaux d'actualisation sont égaux à des signaux de déclenchement prédéterminés.

Les moyens de déclenchement reçoivent alors avantageusement les signaux d'actualisation en provenance d'au moins une des entités suivantes:
- un compteur incrémenté itérativement au cours du traitement de la séquence d'images, les signaux comprenant un temps et/ou un nombre d'images,
- le noeud de détection de mouvement, les signaux comprenant une proportion de zones en mouvement,
- un module de mesure de distorsion, comportant:
   - un noeud de décodage ayant une entrée reliée au noeud d'encodage du dispositif de traitement et une sortie produisant une différence d'images masquée reconstruite,
   - un additionneur ayant une première entrée reliée à la sortie du noeud de décodage, une deuxième entrée prévue pour recevoir l'image de référence et une sortie prévue pour produire une image courante reconstruite, et
   - un comparateur ayant une première entrée reliée à la sortie de l'additionneur, une deuxième entrée prévue pour recevoir l'image courante initiale en amont du noeud de soustraction et une sortie prévue pour produire une mesure de distorsion de l'image courante, les signaux d'actualisation comprenant cette mesure de distorsion, et
- un module de mesure de variation de la taille du flux encodé.

De préférence, les moyens de déclenchement reçoivent alors les signaux d'actualisation en provenance d'au moins deux de ces entités, et préférentiellement des quatre.

L'invention sera mieux comprise et illustrée au moyen de modes particuliers de réalisation et de mise en oeuvre aucunement limitatifs, en référence aux dessins annexés sur lesquels:
La figure 1 est un schéma de principe montrant un système d'encodage-décodage incorporant un dispositif de traitement selon l'invention;
La figure 2 est une représentation fonctionnelle d'un premier mode de réalisation d'un dispositif de traitement selon l'invention utilisable dans le système de la figure 1; et
La figure 3 est une représentation fonctionnelle d'un second mode de réalisation d'un dispositif de traitement selon l'invention utilisable dans le système de la figure 1.

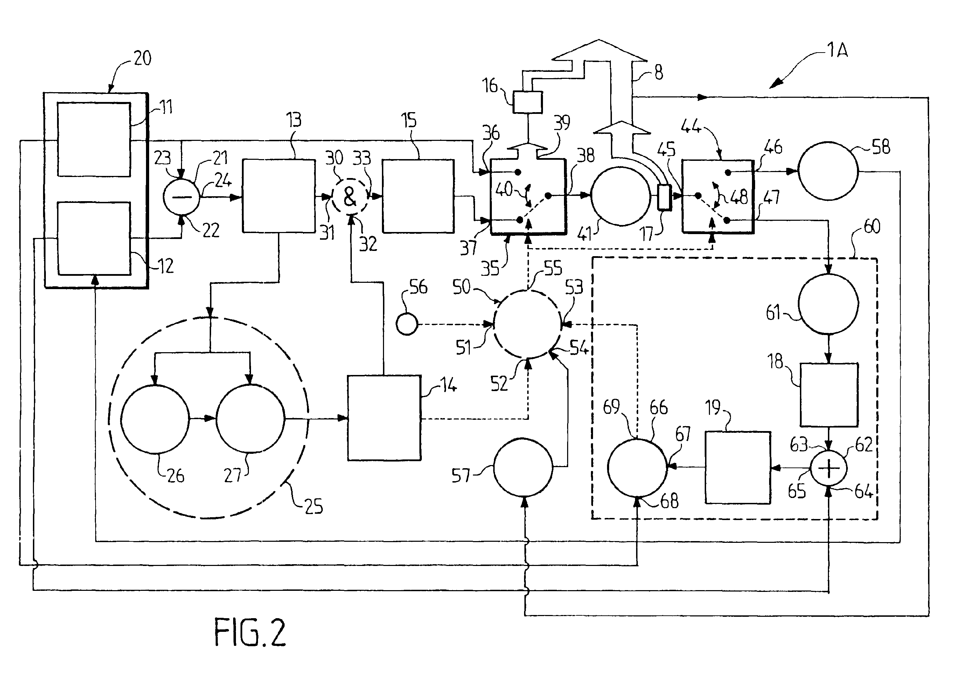

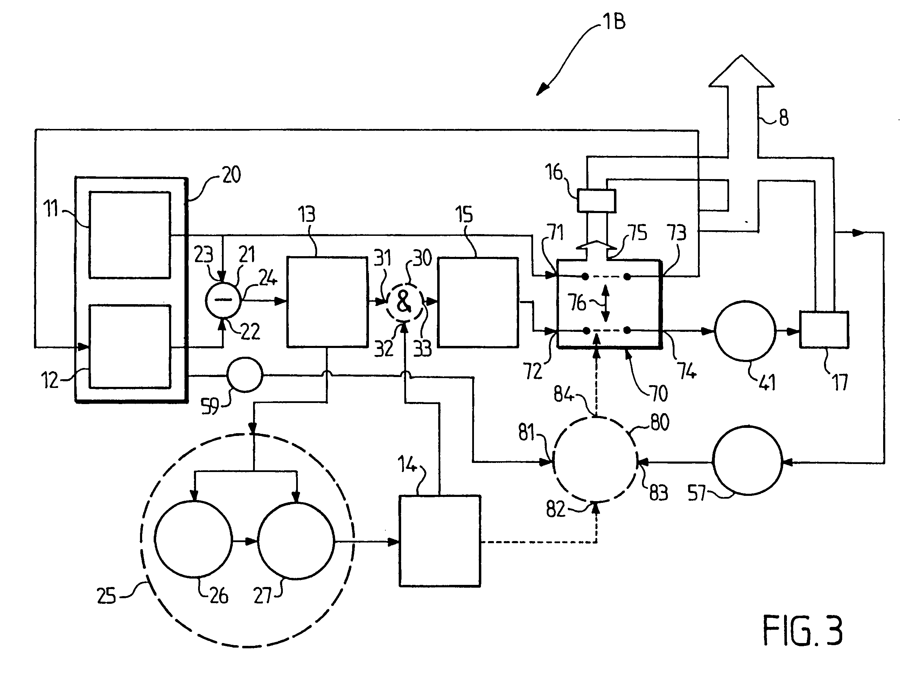

Sur les figures 2 et 3, des éléments identiques ou similaires sont désignés par les mêmes références.

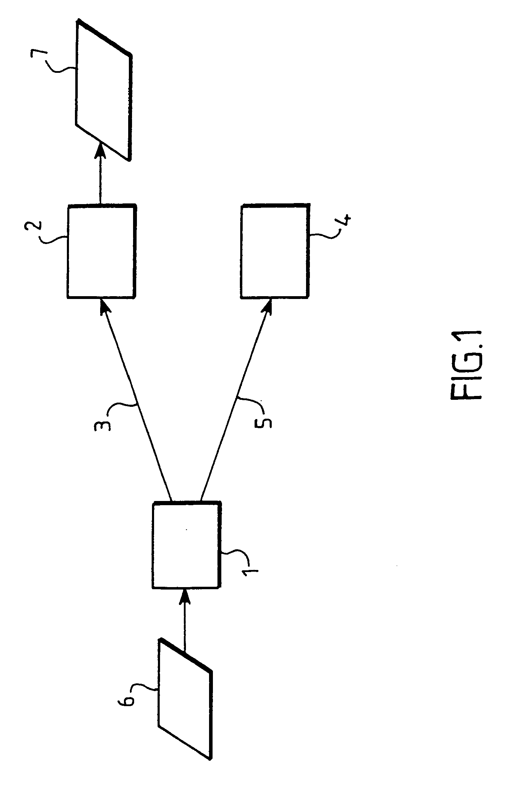

Un système d'encodage-décodage (figure 1) comprend un ensemble d'encodage 1 (émetteur) recevant une séquence d'images 6, un ensemble de décodage 2 (récepteur) et un ensemble de sauvegarde 4. L'ensemble de décodage 2 reçoit des données encodées 3 en provenance de l'ensemble d'encodage 1, par exemple par télétransmission, et décode les données reçues pour reconstituer une séquence d'images reconstruites 7.

L'ensemble de sauvegarde 4 reçoit également des données encodées 5 de l'ensemble d'encodage 1 et les conserve en mémoire, en vue d'un décodage ultérieur.

Dans un premier mode de réalisation de l'ensemble d'encodage 1, référencé 1A (figure 2), celui-ci comprend un bloc de défilement 20 prévu pour contenir à chaque instant une image courante 11 de la séquence d'images 6 et une image de référence 12.

L'ensemble d'encodage 1A comprend :
- un noeud de soustraction 21 ayant une entrée 22 recevant l'image de référence 12, une entrée 23 recevant l'image courante 11, et une sortie 24 destinée à produire une différence 13 des deux images;
- un noeud de détection de mouvement 25, comprenant une unité de seuillage 26 de la différence d'images 13 et une unité de relaxation 27 recevant un signal seuillé de l'unité de seuillage 26 et régularisant une solution d'un modèle de probabilité correspondant à la modélisation d'un champ de Markov, de façon à produire une carte de mouvement 14; selon une première forme du noeud de détection de mouvement 25, celui-ci effectue un seuillage et une modélisation par pixels de manière à produire la carte 14 sous forme d'une carte binaire et selon une seconde forme de réalisation, il effectue un seuillage et une modélisation par bloc ; une forme préférée de relaxation est fondée sur l'algorithme déterministe d'ICM (Iterated Conditional Modes);
- un noeud de masquage 30 ayant une première entrée 31 recevant la différence d'images 13 en provenance du noeud de soustraction 21, une seconde entrée 32 recevant la carte de mouvement 14 en provenance du noeud de détection de mouvement 25 et une sortie 33 produisant une différence d'images masquée 15; pour ce masquage, la valeur du signal de différence est forcée à zéro lorsque le pixel (ou le bloc, dans le cas d'un traitement par bloc) n'est pas détecté en mouvement, sinon la valeur de la différence est maintenue.

L'ensemble d'encodage 1A comprend également un premier système d'aiguillage 35, permettant de décider ou non de l'encodage de la mise à jour de l'image de référence 12. Ce système d'aiguillage 35 a une première entrée 36 prévue pour recevoir l'image courante 11 en provenance du bloc de défilement 20, une seconde entrée 37 prévue pour recevoir la différence d'images masquée 15 en provenance du noeud de masquage 30 et une sortie 38 conduisant à un noeud d'encodage 41. Un commutateur 40 a pour fonction de relier l'entrée 36 ou l'entrée 37 à la sortie 38, selon qu'un signal de déclenchement d'une mise à jour de l'image de référence 12 est envoyé ou non par une unité de déclenchement de mise à jour 50.

Le système d'aiguillage 35 comprend également une sortie 39 prévue pour produire un index 16 des images de référence 12, ultérieurement utilisé pour une reconstruction du flux d'images.

Dans un mode simplifié de réalisation, utilisable pour une émission du flux d'images, le système d'aiguillage 35 ne produit pas par sa sortie 39 l'index 16, mais seulement un indicateur signalant que les données transmises correspondent à l'image de référence mise à jour.

Le noeud d'encodage 41 produit un signal encodé 17 à partir de la différence d'images masquée (production d'une différence d'images courantes codée) ou de l'image courante 11 ( production de l'image de référence 12 au moment d'une mise à jour).

Le signal codé 17, ainsi que l'index 16, forment un flux d'informations 8 émis ou sauvegardé.

Un second système d'aiguillage 44 reçoit le signal codé 17 en provenance du noeud d'encodage 41 par une entrée 45, et comprend une première sortie 46 reliée à un noeud de décodage 58 et une seconde sortie 47 reliée à un module de mesure de distorsion 60. Le second système d'aiguillage 44 est associé à un commutateur 48 commandé par l'unité de déclenchement de mise à jour 50, ayant pour fonction de connecter l'entrée 45 à la sortie 46 lors du déclenchement d'une mise à jour, et à la sortie 47 en l'absence d'une telle indication de mise à jour.

Les signaux émis par l'unité de déclenchement et de mise à jour 50 agissent donc simultanément sur les deux commutateurs 40 et 48.

Le noeud de décodage 58 est relié directement au bloc de défilement 20 et est prévu pour produire une image courante encodée puis décodée, constituant l'image de référence 12 mise à jour.

Le module de mesure de distorsion 60 comprend quand à lui :
- un noeud de décodage 61 ayant une entrée reliée à la sortie 47 du système d'aiguillage 44, c'est-à-dire recevant la différence d'images masquée et encodée, et produisant une différence d'images masquée reconstruite 18;
- un additionneur 62 ayant une première entrée 63 reliée à la sortie du noeud de décodage 61, une seconde entrée 64 prévue pour recevoir l'image de référence 12 et une sortie 65 destinée à produire une image courante reconstruite 19 et
- un comparateur 66 ayant une première entrée 67 prévue pour recevoir l'image courante reconstruite 19 de l'additionneur 62, une seconde entrée 68 prévue pour recevoir l'image courante 11 du bloc de défilement 20 et une sortie 69 produisant une mesure de distorsion de l'image courante, reliée à l'unité de déclenchement de mise à jour 50.

Cette distorsion est avantageusement fondée sur une mesure de PSNR.

Dans des variantes de réalisation, elle correspond à des mesures du SNR ou du RMSE.

Le noeud d'encodage 41 a avantageusement une fonction de compression de signal, préférentiellement fondée sur une méthode du type JPEG avec perte ou une compression par ondelettes comme pour la méthode JPEG-2000. Les noeuds de décodage 58 et 61 ont alors des fonctions de décompression correspondantes.

L'unité de déclenchement de mise à jour 50 comprend quatre entrées 51, 52, 53 et 54 respectivement reliées à une horloge 56, au noeud de détection de mouvement 25, au module de mesure de distorsion 60, et à un module de mesure de variation 57 de la taille de flux du signal codé 17. L'unité 50 reçoit ainsi une fréquence de mise à jour de l'horloge 56, un pourcentage de zones en mouvement du noeud de détection de mouvement 25, une mesure de distorsion du module 60, et une mesure de la variation de taille du flux encodé du module 57. L'unité 50 est prévue pour calculer une pondération linéaire de ces trois valeurs et produire un déclenchement de mise à jour lorsque le paramètre obtenu a une valeur supérieure à un seuil prédéterminé. L'unité 50 comprend une sortie 55 reliée aux commutateurs 40 et 48 des systèmes d'aiguillage 35 et 44, de manière à pouvoir déclencher de manière synchrone une mise à jour de l'image de référence.

L'ensemble d encodage 1A est mis en oeuvre en temps réel, par exemple sur un processeur de traitement de signai parallèle embarcable du type TMS320C80.

En fonctionnement on distingue un premier mode de traitement, du signal de différence masquée, et un second mode de traitement, du signal de référence

Dans le premier mode (encodage de la différence d'images), les étapes de traitement sont les suivantes:
- obtention de la différence d'images 13 par soustraction de la dernière image de référence 12 reconstruite avec l'image courante 11;
- estimation de la carte de mouvement 14 par la modélisation d'un champ de Markov, cette estimation s'appuyant sur la différence d'images 13 et comprenant deux principales phases de traitement:
   - initialisation des observations consistant à seuiller la différence d images 13 et
   - régularisation de la solution du modèle de probabilité pour obtenir la carte de mouvement 14, par exemple la carte binaire des pixels en mouvement:

- masquage de la différence d'images 13 au moyen de la carte de mouvement 14; et
- encodage de la différence d'images masquée 15 ainsi obtenue, par exemple avec compression; une fois encodé ou comprimé, le flux est alors transmis et/ou sauvergardé.

De manière systématique ou périodique, on met également en oeuvre une boucle de contrôle intervenant après l'encodage de la différence d'images masquée 15, qui permet de mesurer la distorsion introduite entre l'image courante 11 initiale et l'image courante reconstruite d'après l'image de référence 12. La dégradation d'image intervient au niveau de l'étape du masquage ainsi que de l'étape d'encodage avec perte (en particulier dans le cas d'une compression ).

Pour mesurer cette dégradation, on procède de la manière suivante:
- obtention de la différence d'images masquée reconstruite 18 par décodage;
- addition du signal obtenu avec l'image de référence 12 reconstruite;
- mesure de la distorsion de l'image courante reconstruite 19 au moyen de l'image courante 11 initiale; et
- processus de décision pour la mise à jour de l'image de référence 12, intégrant la mesure de distorsion ainsi que le pourcentage de zone en mouvement et un paramètre fixe de remise à jour périodique; chacun de ces paramètres est pondéré afin de décider de la remise à jour de l'image de référence en fonction du seuil choisi.

Dans une variante de réalisation et de mise en oeuvre, l'unité de déclenchement de mise à jour 50 ne prend pas en compte la mesure de distorsion, de telle sorte que le module de mesure de distorsion 60 peut être supprimé (allègement de la charge de calcul mais non prise en compte de la dégradation d'image pour la mise à jour de l'image de référence).

Dans le second mode de traitement (mise à jour de l'image de référence), les étapes de mise en oeuvre sont les suivantes :
- au moment du déclenchement d'une mise à jour de l'image de référence 12, encodage de l'image courante 11, puis
- décodage de l'image courante encodée 17, de manière à produire l'image de référence 12 reconstruite.

L'image courante 11 est alors encodée selon la même technique que la différence d'images masquée 15, éventuellement avec un taux de compression distinct, préférentiellement inférieur.

Dans une variante de réalisation et de mise en oeuvre, l'image de référence 12 est mise à jour par encodage et décodage selon une technique différente de celle utilisée pour la différence d'images masquée 15.

Dans un deuxième mode de réalisation de l'ensemble d'encodage, référencé 1B (figure 3), cet ensemble diffère de celui de la figure 2 par les caractéristiques suivantes:
- en aval du noeud de masquage 30, l'ensemble d'encodage 1 B comprend un système d'aiguillage 70 ayant:
   - une première entrée 71 connectée au bloc de défilement 20 et destinée à recevoir l'image courante 11,
   - une seconde entrée 72 reliée au noeud de masquage 30 et destinée à recevoir la différence d'images masquée 15.
   - une première sortie 73 reliée au bloc de défilement 20 et prévue pour produire l'image de référence 12 mise à jour,
   - une deuxième sortie 74 reliée au noeud d'encodage 41.
   - une troisième sortie 75 prévue pour produire l'index 16 des images de référence et
   - un commutateur 76 prévu pour relier l'entrée 71 à la sortie 73 ou l'entrée 72 à la sortie 74, selon que la mise à jour de l'image de référence 12 est déclenchée ou non ;
- l'unité de déclenchement de mise à jour 80 comprend une première entrée 81 reliée à un compteur 59, lui-même connecté au bloc de défilement 20 et ayant pour fonction de compter les images défilant, une seconde entrée 82 reliée au noeud de détection de mouvement 25 et prévue pour recevoir un pourcentage de zones en mouvement, une troisième entrée 83 reliée au module 57 et prévue pour recevoir une mesure de variation de la taille du flux encodé et une sortie 84 capable de produire un signal de déclenchement agissant sur le commutateur 76.

Les informations 8 constituées par la différence d'images masquée et encodée 17, l'image de référence 12 de mise à jour et l'index 16 des images de référence sont prévues pour être émises et/ou sauvegardées

Ainsi, dans le fonctionnement en mode d'encodage de la différence d'images, on s'affranchit de mesures de distorsion, le paramètre de mise à jour étant calculé seulement à partir du compteur d'images, du pourcentage de zones en mouvement et de la variation de taille du flux encodé.

Par ailleurs, pour le mode de fonctionnement pour la mise à jour de l'image de référence, on n'effectue pas d'encodage et de décodage de l'image courante utilisée comme référence.

## Revendications

1. Procédé de traitement d'au moins une séquence d'images (6), dans lequel on met en oeuvre les opérations suivantes, itérativement pour une pluralité d'images courantes (11) de ladite séquence:
- on effectue la différence entre une desdites images courantes (11) et une image de référence (12),
- on distingue dans ladite différence d'images (13), des zones de mouvement et des zones d'immobilité, lesdites zones étant distinguées au moyen d'au moins un seuil de mouvement,
- on masque ladite différence d'images (13) en imposant des valeurs nulles dans les zones d'immobilité, et
- on encode la différence d'images masquée (15),
**caractérisé en ce qu'**on détermine les zones de mouvement et les zones d'immobilité par la modélisation d'un champ de Markov .

2. Procédé de traitement selon la revendication 1, **caractérisé en ce qu'**on effectue la modélisation du champ de Markov point par point.

3. Procédé de traitement selon la revendication 1, **caractérisé en ce qu'**on effectue la modélisation du champ de Markov par blocs.

4. Procédé de traitement selon l'une quelconque des revendications précédentes, **caractérisé en ce qu'**avant d'effectuer la modélisation du champ de Markov, on seuille ladite différence d'images (13).

5. Procédé de traitement selon l'une quelconque des revendications précédentes, **caractérisé en ce que** lors de l'encodage, on compresse ladite différence d'images masquée (15).

6. Procédé de traitement selon la revendication 5, **caractérisé en ce qu'**on compresse ladite différence d'images masquée (15) au moyen d'une méthode JPEG, préférentiellement avec perte.

7. Procédé de traitement selon la revendication 5, **caractérisé en ce qu'**on compresse ladite différence d'images masquée (15) au moyen d'une méthode de compression par ondelettes, préférentiellement JPEG-2000.

8. Procédé de traitement selon la revendication 5, **caractérisé en ce qu'**on compresse ladite différence d'images masquée (15) au moyen d'une méthode de compression DVC.

9. Procédé de traitement selon l'une quelconque des revendications précédentes, **caractérisé en ce qu'**au cours dudit procédé, on met à jour au moins une fois l'image de référence (12), en déterminant ladite image de référence à partir d'au moins une image de base parmi ladite séquence d'images.

10. Procédé de traitement selon la revendication 9, **caractérisé en ce qu'**on encode puis on décode les images de base pour déterminer l'image de référence (12), de préférence selon une même méthode que pour ladite différence d'images masquée (15).

11. Procédé de traitement selon la revendication 9, **caractérisé en ce que** pour déterminer l'image de référence (12), on utilise telles quelles les images de base

12. Procédé de traitement selon l'une quelconque des revendications 9 à 11, **caractérisé en ce qu'**on calcule de manière répétitive, préférentiellement périodique, un paramètre de mise à jour de l'image de référence (12), et on remet à jour l'image de référence (12) quand ledit paramètre de mise à jour est supérieur à un seuil de mise à jour prédéterminé.

13. Procédé de traitement selon la revendication 12, **caractérisé en ce que** pour calculer ledit paramètre de mise à jour, on détermine une proportion de zones en mouvement, ledit paramètre de mise à jour étant une fonction croissante de ladite proportion.

14. Procédé de traitement selon l'une des revendications 12 ou 13, **caractérisé en ce que** pour calculer ledit paramètre de mise à jour, on mesure une distorsion de ladite image courante, en comparant à ladite image courante initiale (11) avant soustraction de l'image de référence (12), une image courante reconstruite (19) à partir de ladite différence d'images encodée (17) et de ladite image de référence (12), ledit paramètre de mise à jour étant une fonction croissante de ladite distorsion.

15. Procédé de traitement selon la revendication 14, **caractérisé en ce que** pour comparer les images courantes initiale (11) et reconstruite (19) on utilise un rapport de pic signal sur bruit (PSNR).

16. Procédé de traitement selon l'une quelconque des revendications 12 à 15, **caractérisé en ce que** pour calculer ledit paramètre de mise à jour, on utilise un compteur incrémenté itérativement au cours du traitement de ladite séquence d'images (6), ledit paramètre de mise à jour étant une fonction croissante dudit compteur.

17. Procédé de traitement selon l'une quelconque des revendications 12 à 16, **caractérisé en ce que** pour calculer ledit paramètre de mise à jour, on mesure une variation de taille du flux encodé, le paramètre de mise à jour étant une fonction croissante de cette variation.

18. Procédé de traitement selon l'une quelconque des revendications 9 à 17, **caractérisé en ce qu'**on met à jour de manière répétitive, préférentiellement périodique, l'image de référence (12).

19. Dispositif de traitement (1) d'au moins une séquence d'images (6) comprenant:
- un noeud de soustraction (21) d'une image courante (11) de ladite séquence (6) et d'une image de référence (12), capable de produire une différence d'images (13),
- un noeud de détection de mouvement (25) permettant de distinguer dans ladite différence d'images (13) des zones de mouvement et des zones d'immobilité au moyen d'au moins un seuil de mouvement,
- un noeud de masquage (30) de la différence d'images (13) par mise à zéro dans les zones d'immobilité, et
- un noeud d'encodage (41) de ladite différence d'images masquée (15),
**caractérisé en ce que** le noeud de détection de mouvement (25) est prévu pour déterminer une carte de mouvement (14) par la modélisation d'un champ de Markov.

20. Dispositif de traitement selon la revendication 19, **caractérisé en ce qu'**il comprend un ensemble de mise à jour de l'image de référence (12), comportant:
- au moins un système de sélection (35, 70 ) ayant une entrée de référence (36, 71) capable de recevoir ladite image courante (11), une entrée courante (37, 72) reliée au noeud de masquage (32), une sortie de référence (38, 73) servant à produire l'image de référence (12) et une sortie courante (38, 74) reliée au noeud d'encodage (41), l'entrée de référence (36, 71) pouvant être connectée à la sortie de référence (38, 73) et l'entrée courante (37, 72) pouvant être connectée à la sortie courante (38, 74), et
- des moyens de déclenchement (40, 50; 76, 80), recevant des signaux d'actualisation du dispositif de traitement et prévus pour déclencher une connexion de l'entrée de référence (36, 71) et de la sortie de référence (38, 73) quand les signaux d'actualisation sont égaux à des signaux de déclenchement prédéterminés.

21. Dispositif de traitement selon la revendication 20, **caractérisé en en ce que** les moyens de déclenchement (40, 50; 76, 80) reçoivent les signaux d'actualisation en provenance d'au moins une des entités suivantes:
- un compteur (56,59) incrémenté itérativement au cours du traitement de ladite séquence d'images (6), lesdits signaux comprenant un temps et/ou un nombre d'images ,
- le noeud de détection de mouvement (25), lesdits signaux comprenant une proportion de zones en mouvement,
- un module de mesure de distorsion (60), comportant un noeud de décodage (61) ayant une entrée reliée au noeud d'encodage (41) dudit dispositif de traitement et une sortie produisant une différence d'images masquée reconstruite (18), un additionneur (62) ayant une première entrée (63) reliée à la sortie du noeud de décodage (61), une seconde entrée (64) prévue pour recevoir ladite image de référence (12) et une sortie (65) prévue pour produire une image courante reconstruite (19), et un comparateur (66) ayant une première entrée (67) reliée à la sortie de l'additionneur (62), une seconde entrée (68) prévue pour recevoir l'image courante initiale (11) en amont du noeud de soustraction (21) et une sortie (69) prévue pour produire une mesure de distorsion de ladite image courante, lesdits signaux comprenant ladite mesure de distorsion, et
- un module de mesure de variation (57) de la taille du flux encodé.

22. Dispositif de traitement selon la revendication 19, **caractérisé en ce que** les moyens de déclenchement (40, 50; 76, 80) reçoivent les signaux d'actualisation en provenance d'au moins deux desdites entités et préférentiellement des quatre.

## Claims

1. A method for processing at least one image sequence (6), wherein the following operations are implemented, iteratively for a plurality of current images (11) of said sequence:
- the difference between one of said current images (11) and a reference image (12) is determined,
- movement zones and immobility zones are discriminated in said image difference (13), said zones being discriminated by means of at least one movement threshold,
- said image difference (13) is masked by imposing zero values in immobility zones, and
- the masked image difference (15) is encoded,
**characterised in that** the movement zones and the immobility zones are determined by modeling a Markov field.

2. A processing method according to claim 1, **characterised in that** the modeling of the Markov field is carried out point-by-point.

3. A processing method according to claim 1, **characterised in that** the modeling of the Markov field is carried out by blocks.

4. A processing method according to any of the previous claims, **characterised in that** before carrying out the modeling of the Markov field, the image difference (13) is subjected to a threshold.

5. A processing method according to any of the previous claims, **characterised in that** during encoding, the masked image difference (15) is compressed.

6. A processing method according to claim 5, **characterised in that** said masked image difference (15) is compressed by means of a JPEG method, preferably with a loss.

7. A processing method according to claim 5, **characterised in that** said masked image difference (15) is compressed by means of a wavelet compression method, preferably JPEG-2000.

8. A processing method according to claim 5, **characterised in that** said masked image difference (15) is compressed by means of a DVC compression method.

9. A processing method according to any of the previous claims, **characterised in that** during said method, the reference image (12) is updated at least once, by determining said reference image from at least one basic image among said image sequence.

10. A processing method according to claim 9,
**characterised in that** the basic images are encoded then decoded to determine the reference image (12), preferably according to the same method as for said masked image difference (15).

11. A processing method according to claim 9,
**characterised in that** to determine the reference image (12), the basic images are used as they are.

12. A processing method according to any of the claims 9 to 11, **characterised in that** a parameter for updating the reference image (12) is calculated repeatedly, preferably periodically and the reference image (12) is updated when said updating parameter is greater than a predetermined updating threshold.

13. A processing method according to claim 12,
**characterised in that** for calculating said updating parameter, a proportion of moving zones is determined, wherein said updating parameter is an increasing function of said proportion.

14. A processing method according to any of the claims 12 or 13, **characterised in that** for calculating said updating parameter, a distortion of said current image is measured, by comparing to said initial current image (11) before subtracting from the reference image (12), a reconstructed current image (19) from said encoded image difference (17) and said reference image (12), wherein said updating parameter is an increasing function of said distortion.

15. A processing method according to claim 14,
**characterised in that** for comparing the initial (11) and reconstructed (19) current images, a peak signal/noise ratio (PSNR) is used.

16. A processing method according to any of the claims 12 to 15, **characterised in that** for calculating said updating parameter, an iteratively incremented counter is used when processing said image sequence (6), wherein said updating parameter is an increasing function of said counter.

17. A processing method according to any of the claims 12 to 16, **characterised in that** for calculating said updating parameter, a variation in size of the encoded flow is measured, the updating parameter being an increasing function of said variation.

18. A processing method according to any of the claims 9 to 17, **characterised in that** the reference image (12) is updated repeatedly, preferably periodically.

19. A device (1) for processing at least one image sequence (6) including:
- a node (21) for subtracting a current image (11) from said sequence (6) and a reference image (12), capable of generating an image difference (13),
- a motion detection node (25) enabling to distinguish in said image difference (13) movement zones and immobility zones by means of at least one movement threshold,
- a node (30) for masking the image difference (13) by zeroing in the immobility zones, and
- a node (41) for encoding said masked image difference (15),
**characterised in that** the motion detection node (25) is provided for determining a movement map (14) by modeling a Markov field.

20. A processing device according to claim 19, **characterised in that** it includes an assembly for updating the reference image (12), comprising:
- at least one selection system (35, 70) having a reference input (36, 71) capable of receiving said current image (11), a current input (37, 72) connected to the masking node (32), a reference output (38, 73) used for generating the reference image (12) and a current output (38, 74) connected to the encoding node (41), wherein the reference input (36, 71) may be connected to the reference output (38, 73) and the current input (37, 72) may be connected to the current output (38, 74), and
- triggering means (40, 50; 76, 80), receiving signals for updating the processing device and provided for triggering a connection of the reference input (36, 71) and of the reference output (38, 73) when the updating signals are equal to predetermined triggering signals.

21. A processing device according to claim 20, **characterised in that** the triggering means (40, 50; 76, 80) receive the updating signals from at least one of the following entities:
- an iteratively incremented counter (56,59) when processing said image sequence (6), wherein said signals include a time and/or a number of images,
- the motion detection node (25), wherein said signals include a proportion of motion zones,
- a distortion measuring module (60), including a decoding node (61) having an input connected to the encoding node (41) of said processing device and an output generating a reconstructed masked image difference (18), an adder (62) having a first input (63) connected to the output of the decoding node (61), a second input (64) provided for receiving said reference image (12) and an output (65) provided for generating a reconstructed current image (19), and a comparator (66) having a first input (67) connected to the output of the adder (62), a second input (68) provided for receiving the initial current image (11) upstream of the subtracting node (21) and an output (69) provided for generating a distortion measurement of said current image, said signals including said distortion measurement, and
- a module for measuring the variation (57) in size of the encoded flow.

22. A processing device according to claim 19, **characterised in that** the triggering means (40, 50; 76, 80) receive the updating signals from at least two of said entities and preferably from the four.

## Patentansprüche

1. Verarbeitungsverfahren mindestens einer Bildsequenz (6), bei dem man die folgenden Vorgänge für mehrere aktuelle Bilder (11) der Sequenz wiederholt umsetzt:
- man erstellt den Unterschied zwischen einem der aktuellen Bilder (11) und einem Bezugsbild (12),
- man unterscheidet in dem Bildunterschied (13) Bewegungszonen und Stillstandszonen, wobei die Zonen mittels mindestens eines Bewegungsschwellenwerts unterschieden werden,
- man maskiert den Bildunterschied (13), indem man Werte gleich null in den Stillstandszonen auferlegt, und
- man codiert den maskierten Bildunterschied (15),
**dadurch gekennzeichnet, dass** man die Bewegungszonen und die Stillstandszonen durch Modellieren eines Markov-Felds bestimmt.

2. Verarbeitungsverfahren nach Anspruch 1, **dadurch gekennzeichnet, dass** man das Modellieren des Markov-Felds punktweise ausführt.

3. Verarbeitungsverfahren nach Anspruch 1, **dadurch gekennzeichnet, dass** man das Modellieren des Markov-Felds blockweise ausführt.

4. Verarbeitungsverfahren nach einem der vorhergehenden Ansprüche, **dadurch gekennzeichnet, dass** man vor dem Ausführen der Modellierung des Markov-Felds einen Schwellenwert des Bildunterschieds (13) bestimmt.

5. Verarbeitungsverfahren nach einem der vorhergehenden Ansprüche, **dadurch gekennzeichnet, dass** man beim Codieren den maskierten Bildunterschied (15) komprimiert.

6. Verarbeitungsverfahren nach Anspruch 5, **dadurch gekennzeichnet, dass** man den maskierten Bildunterschied (15) mittels eines JPEG-Verfahrens, vorzugsweise mit Verlust, komprimiert.

7. Verarbeitungsverfahren nach Anspruch 5, **dadurch gekennzeichnet, dass** man den maskierten Bildunterschied (15) mittels eines Wavelet-Kompressionsverfahrens, vorzugsweise JPEG-2000 komprimiert.

8. Verarbeitungsverfahren nach Anspruch 5, **dadurch gekennzeichnet, dass** man den maskierten Bildunterschied (15) mittels eines DVC-Kompressionsverfahrens komprimiert.

9. Verarbeitungsverfahren nach einem der vorhergehenden Ansprüche, **dadurch gekennzeichnet, dass** man im Laufe des Verfahrens das Bezugsbild (12) mindestens einmal aktualisiert, indem man das Bezugsbild ausgehend von mindestens einem Basisbild aus der Bildsequenz bestimmt.

10. Verarbeitungsverfahren nach Anspruch 9, **dadurch gekennzeichnet, dass** man die Basisbilder codiert und dann decodiert, um das Bezugsbild (12), vorzugsweise gemäß einer gleichen Methode wie für den maskierten Bildunterschied (15) zu bestimmen.

11. Verarbeitungsverfahren nach Anspruch 9, **dadurch gekennzeichnet, dass** man zum Bestimmen des Bezugsbilds (12) die Basisbilder so wie sie sind verwendet.

12. Verarbeitungsverfahren nach einem der Ansprüche 9 bis 11, **dadurch gekennzeichnet, dass** man wiederholt und vorzugsweise periodisch einen Aktualisierungsparameter des Bezugsbilds (12) berechnet, und dass man das Bezugsbild (12) aktualisiert, wenn der Aktualisierungsparameter größer ist als ein vorbestimmter Aktualisierungsschwellenwert.

13. Verarbeitungsverfahren nach Anspruch 12, **dadurch gekennzeichnet, dass** man zum Berechnen des Aktualisierungsparameters einen Anteil von Bewegungszonen bestimmt, wobei der Aktualisierungsparameter eine steigende Funktion des Anteils ist.

14. Verarbeitungsverfahren nach einem der Ansprüche 12 oder 13,
**dadurch gekennzeichnet, dass** man zum Berechnen des Aktualisierungsparameters eine Verzerrung des aktuellen Bilds misst, indem man mit dem ursprünglichen aktuellen Bild (11) vor der Subtraktion des Bezugsbilds (12) ein aktuelles Bild (19) vergleicht, das ausgehend von dem codierten Bildunterschied (17) und dem Bezugsbild (12) rekonstruiert wird, wobei der Aktualisierungsparameter eine steigende Funktion der Verzerrung ist.

15. Verarbeitungsverfahren nach Anspruch 14, **dadurch gekennzeichnet, dass** man zum Vergleichen des ursprünglichen aktuellen Bilds (11) und rekonstruierten Bilds (19) ein Signal-Rauschverhältnis (PSNR) verwendet.

16. Verarbeitungsverfahren nach einem der Ansprüche 12 bis 15,
**dadurch gekennzeichnet, dass** man zum Berechnen des Aktualisierungsparameters einen Zähler verwendet, der im Laufe der Verarbeitung der Bildsequenz (6) wiederholt inkrementiert wird, wobei der Aktualisierungsparameter eine steigende Funktion des Zählers ist.

17. Verarbeitungsverfahren nach einem der Ansprüche 12 bis 16,
**dadurch gekennzeichnet, dass** man zum Berechnen des Aktualisierungsparameters eine Größenvariation des codierten Stroms misst, wobei der Aktualisierungsparameter eine steigende Funktion dieser Variation ist.

18. Verarbeitungsverfahren nach einem der Ansprüche 9 bis 17, **dadurch gekennzeichnet, dass** man das Bezugsbild (12) wiederholt, vorzugsweise periodisch aktualisiert.

19. Vorrichtung (1) zum Verarbeiten mindestens einer Bildsequenz (6), die Folgendes aufweist:
- einen Subtraktionsknoten (21) eines aktuellen Bilds (11) der Sequenz (6) und eines Bezugsbilds (12), der einen Bildunterschied (13) erzeugen kann,
- einen Bewegungserfassungsknoten (25), der es erlaubt, in dem Bildunterschied (13) Bewegungszonen und Stillstandszonen mittels mindestens eines Bewegungsschwellenwerts zu unterscheiden,
- einen Maskierungsknoten (30) des Bildunterschieds (13) durch Reset in den Stillstandszonen, und
- einen Codierknoten (41) des maskierten Bildunterschieds (15),
**dadurch gekennzeichnet, dass** der Bewegungserfassungsknoten (25) vorgesehen ist, um eine Bewegungskarte (14) durch das Modellieren eines Markov-Felds zu bestimmen.

20. Verarbeitungsvorrichtung nach Anspruch 19, **dadurch gekennzeichnet, dass** sie eine Einheit zum Aktualisieren des Bezugsbilds (12) mit Folgendem aufweist:
- mindestens ein Auswahlsystem (35, 70), das einen Bezugseingang (36, 71) hat, der das aktuelle Bild (11) empfangen kann, einen aktuellen Eingang (37, 72), der mit dem Maskierungsknoten (32) verbunden ist, einen Bezugsausgang (38, 73), der dazu dient, das Bezugsbild (12) zu erzeugen, und einen aktuellen Ausgang (38, 74), der mit dem Codierknoten (41) verbunden ist, wobei der Bezugseingang (36, 71) mit dem Bezugsausgang (38, 73) verbunden werden kann, und wobei der aktuelle Eingang (37, 72) mit dem aktuellen Ausgang (38, 74) verbunden werden kann, und
- Auslösemittel (40, 50; 76, 80), die Aktualisierungssignale der Verarbeitungsvorrichtung empfangen und die vorgesehen sind, um eine Verbindung des Bezugseingangs (36, 71) und des Bezugsausgangs (38, 73) auszulösen, wenn die Aktualisierungssignale gleich vorbestimmten Auslösesignalen sind.

21. Verarbeitungsvorrichtung nach Anspruch 20, **dadurch gekennzeichnet, dass** die Auslösemittel (40, 50; 76, 80) die Aktualisierungssignale empfangen, die von mindestens einer der folgenden Einheiten stammen:
- ein Zähler (56, 59), der wiederholt im Laufe der Verarbeitung der Bildsequenz (6) inkrementiert wird, wobei die Signale eine Zeit und/oder eine Anzahl von Bildern enthalten,
- ein Bewegungserfassungsknoten (25), wobei die Signale einen Anteil von Bewegungszonen aufweisen,
- ein Verzerrungsmessmodul (60), das einen Decodierknoten (61) aufweist, der einen Eingang hat, der mit dem Codierknoten (41) der Verarbeitungsvorrichtung verbunden ist, und einen Ausgang, der einen rekonstruierten maskierten Bildunterschied (18) erzeugt, ein Addierglied (62), das einen ersten Eingang (63) hat, der mit dem Ausgang des Decodierknotens (61) verbunden ist, einen zweiten Eingang (64), der vorgesehen ist, um das Bezugsbild (12) zu empfangen, und einen Ausgang (65), der vorgesehen ist, um ein rekonstruiertes aktuelles Bild (19) zu erzeugen, und einen Komparator (66), der einen ersten Eingang (67) hat, der mit dem Ausgang des Addierglieds (62) verbunden ist, einen zweiten Eingang (68), der vorgesehen ist, um das ursprüngliche aktuelle Bild (11) stromaufwärts des Subtraktionsknotens (21) zu empfangen, und einen Ausgang (69), der vorgesehen ist, um eine Verzerrungsmessung des aktuellen Bilds zu erzeugen, wobei die Signale die Verzerrungsmessung enthalten, und
- ein Variationsmessmodul (57) der Größe des codierten Stroms.

22. Verarbeitungsvorrichtung nach Anspruch 19, **dadurch gekennzeichnet, dass** die Auslösemittel (40, 50; 76, 80) die Aktualisierungssignale von mindestens zwei der Einheiten und vorzugsweise von den vier erhalten.
